Europäisches Patentamt

European Patent Office

Office européen des brevets

(19)

(11)  EP 0 836 622 B1

(12)  FASCICULE DE BREVET EUROPEEN

(45) Date de publication et mention
de la délivrance du brevet:
**05.01.2000  Bulletin 2000/01**

(51) Int Cl.⁷: **C08B 3/04**, D01F 2/28,
B60C 9/00

(21) Numéro de dépôt: **96924806.1**

(22) Date de dépôt: **28.06.1996**

(86) Numéro de dépôt international:
**PCT/EP96/02827**

(87) Numéro de publication internationale:
**WO 97/02292 (23.01.1997 Gazette 1997/05)**

(54) **PROCEDE D'OBTENTION D'UNE SOLUTION DE FORMIATE DE CELLULOSE PAR IMPREGNATION PUIS MALAXAGE DE PLAQUES DE CELLULOSE**

VERFAHREN ZUR HERSTELLUNG EINER ZELLULOSEFORMIATELÖSUNG DURCH IMPRÄGNIERUNG UND KNETEN VON ZELLULOSEPLATTEN

METHOD FOR PREPARING A CELLULOSE FORMATE SOLUTION BY IMPREGNATING AND KNEADING CELLULOSE SLABS

(84) Etats contractants désignés:
**AT DE FI FR GB NL**

(30) Priorité:  **03.07.1995  FR 9508005**

(43) Date de publication de la demande:
**22.04.1998  Bulletin 1998/17**

(73) Titulaire: **MICHELIN RECHERCHE ET TECHNIQUE S.A.**
**CH-1763 Granges-Paccot (CH)**

(72) Inventeurs:
• **AUBRY, Jean-Claude**
**CH-8600 Dübendorf (CH)**

• **KOENDERS, Bernardus, Maria**
**NL-6931 WG Westervoort (NL)**
• **WILLIAMS, James, Cartwright**
**Memphis, TN 38120 (US)**

(74) Mandataire: **Ribière, Joel et al**
**Michelin & Cie**
**Service SGD/LG/PI-LAD**
**63040 Clermont-Ferrand Cedex 09 (FR)**

(56) Documents cités:
**WO-A-85/05115**       **WO-A-91/16357**
**WO-A-94/17136**

**Description**

L'invention concerne les dérivés cellulosiques.

On entend ici par "dérivés cellulosiques" les composés formés, à la suite de réactions chimiques, par substitution des groupes hydroxyle de la cellulose, ces dérivés étant aussi appelés dérivés de substitution. L'invention concerne en particulier les formiates de cellulose, ainsi que les solutions de formiates de cellulose.

Des procédés d'obtention de dérivés cellulosiques et/ou de solutions de ces dérivés, ainsi que certaines étapes spécifiques de ces procédés, ont été décrits dans de très nombreux documents. On se reportera notamment au brevet EP-B-179 822. Ce document décrit l'obtention de compositions de filage anisotropes à base de formiate de cellulose, par réaction de cellulose avec de l'acide formique et de l'acide phosphorique, ainsi que des fibres à hautes propriétés mécaniques obtenues à partir de ces compositions, ces fibres pouvant être régénérées.

L'invention concerne plus précisément les procédés de fabrication des formiates de cellulose et de leurs solutions, notamment des solutions susceptibles d'être filées, lorsque ces procédés sont mis en oeuvre à partir d'une pâte de cellulose conditionnée industriellement sous la forme de plaques.

Ces plaques sont, de manière connue, des feuilles rigides dont l'épaisseur est généralement comprise entre 0,2 mm et 5,0 mm, le plus souvent de l'ordre de 0,5 à 2 mm, et dans lesquelles la cellulose se présente sous forme fibreuse, plus ou moins compactée selon la densité souhaitée pour ces plaques. Ces plaques se présentent généralement sous une forme coupée, rectangulaire et plate, ou roulées sur elles-mêmes pour former des bandes ou des bandelettes continues.

On distingue habituellement, par convention, des plaques dites "basse densité", dont la masse volumique est inférieure à 0,5 g/cm$^3$, et des plaques dites "haute densité" dont la masse volumique est au moins égale à 0,5 g/cm$^3$.

Dans l'industrie de transformation de la cellulose, et notamment dans l'industrie des fibres et films cellulosiques, ce sont ces plaques, aisément transportables et stockables, qui sont essentiellement utilisées comme matière de base. De telles plaques ou leur utilisation comme matière première ont par exemple été décrites dans les brevets ou demandes de brevet suivants : EP-A-251 674, FR-A-2 678 625, US-A-2 105 498, US-A-2 393 783, US-A-2 644 818, US-A-4 211 574, US-A-4 336 370, US-A-4 343 840, US-A-4 840 673, US-A-5 036 900, US-A-5 114 535.

Lorsque de telles plaques de cellulose sont utilisées comme matière première, toutes les méthodes connues d'obtention de dérivés cellulosiques et/ou de leurs solutions, aussi différentes soient elles, nécessitent une même étape préalable de destruction mécanique de ces plaques, opération destinée à leur faire perdre leur unité, leur cohésion, en séparant les fibres qui les constituent, de manière à rendre ainsi la cellulose accessible aux divers réactifs utilisés.

Par destruction mécanique, on entend ici, de manière très générale, toute opération de désagrégation en général, qu'il s'agisse d'une désagrégation totale, c'est-à-dire d'une réduction en poudre obtenue par une technique de pulvérisation, ou qu'il s'agisse d'une désagrégation partielle obtenue par déchiquetage, broyage partiel, attrition ou toute action équivalente, de telles opérations de désagrégation étant conduites aux moyens d'outils ou de machines appropriés connus, tels que par exemple des hachoirs, des appareils à meules, des broyeurs, des déchiqueteuses.

La réduction en poudre de plaques de cellulose est une opération courante. Elle est généralement conduite indépendamment de tout autre procédé, la poudre obtenue pouvant ainsi être stockée avant d'être traitée. La poudre présente par ailleurs l'avantage d'une bonne réactivité chimique et celui d'être disponible commercialement. L'emploi de poudre est donc tout à fait répandu, notamment pour des essais à l'échelle du laboratoire ne nécessitant que des quantités de matière limitées.

Cette réduction en poudre présente, outre les coûts de pulvérisation eux-mêmes, de nombreux autres inconvénients. Un inconvénient majeur réside dans les problèmes de sécurité liés aux risques d'explosion ou d'incendie. Ces risques, inhérents aux opérations de pulvérisation, de manipulation ou stockage de poudres en atmosphère non contrôlée, ont été mentionnés par exemple dans US-A-5 036 900. Ils nécessitent d'utiliser des dispositifs de contrôle et de sécurité coûteux. D'autres inconvénients connus sont liés à la perte de matière sous forme de poussières, à la présence même de ces poussières, aux problèmes de transport et de stockage posés devant une augmentation importante du volume de la matière première après sa pulvérisation. Toutes ces contraintes sont difficilement acceptables, d'un point de vue économique, pour une fabrication industrielle à grande échelle.

Les méthodes de désagrégation partielle, telles qu'évoquées précédemment, ont eu, pour les différentes raisons exposées ci-dessus, la préférence de très nombreux procédés. On ne citera que quelques exemples.

Le document FR-A-2 678 625 décrit un procédé de production d'acétate de cellulose dans lequel on désintègre, à l'aide de différents broyeurs, une plaque de cellulose à haute densité. US-A-2 393 783 décrit la destruction de plaques et la dispersion des fibres individuelles en soumettant ces plaques à un souffle violent d'air comprimé, avant estérification. US-A-2 644 818 décrit un procédé d'obtention d'éthers de cellulose avec une étape spécifique de déchiquetage de plaques d'alcali-cellulose.

US-A-5 036 900 décrit une machine destinée à déchiqueter des plaques de cellulose à haute densité, avant une étape d'acétylation.

Les procédés industriels les plus connus et développés, comme par exemple ceux connus sous le nom de procédé acétate, ou procédé xanthate ou viscose, du nom des dérivés cellulosiques mis en oeuvre ou de celui de leurs solutions, font également appel à ces techniques de désagrégation partielle de plaques. Cette désagrégation est alors une étape à part entière, complètement intégrée, de ces procédés.

Cependant, toutes ces méthodes de désagrégation partielle présentent elles aussi un certain nombre d'inconvénients. Outre les coûts machine proprement dits, un inconvénient majeur réside dans le risque de désactivation (perte de réactivité chimique) de la cellulose au cours de la désagrégation. Pour éviter ou limiter cette désactivation, on devra par exemple désagréger les plaques en utilisant des conditions spécifiques, et restrictives, de séchage et d'humidité de la matière. Dans certains cas, un traitement de réactivation de la cellulose pourra même être nécessaire. D'autres inconvénients résident dans les risques d'une dégradation de la cellulose (comme une dépolymérisation par exemple), les pertes de matière sous forme de poussières. Tous ces inconvénients ont bien sûr une incidence négative sur le coût industriel final. Certains d'entre eux ont été notamment mentionnés dans les documents suivants : FR-A-2 678 625, US-A-2 105 498, US-A-2 393 783, US-A-5 036 900, US-A-5 114 535.

Le but de la présente invention est de proposer un procédé d'obtention de solutions de formiates de cellulose, et de ces formiates de cellulose eux-mêmes, en partant directement de plaques de cellulose.

Ce procédé ne nécessite aucune action préalable de désagrégation mécanique de ces plaques, il est rapide, facile à mettre en oeuvre, et exempt de tous les inconvénients précités. Il permet d'obtenir des solutions, et notamment des solutions de filage, par simple imprégnation des plaques suivie d'un malaxage de ces plaques imprégnées.

Le procédé conforme à l'invention, pour préparer directement une solution de formiate de cellulose par réaction de cellulose avec de l'acide formique et de l'acide phosphorique, est caractérisé par les points suivants:

a) on utilise des plaques de cellulose;

b) on imprègne tout d'abord complètement lesdites plaques avec un liquide d'imprégnation à base d'acide formique;

c) après cette imprégnation préliminaire, on malaxe les plaques au contact à la fois de l'acide formique et de l'acide phosphorique.

L'invention sera aisément comprise à l'aide de la description et des exemples non limitatifs qui suivent, ainsi que des figures toutes schématiques relatives à ces exemples.

Sur le dessin:

- la figure 1 représente un dispositif permettant la réalisation d'un test d'imprégnation de plaques de cellulose par un liquide d'imprégnation à base d'acide formique, ce test pouvant aider dans le choix de certaines conditions de mise en oeuvre du procédé de l'invention ;

- la figure 2 représente la variation de la racine carrée du temps d'imprégnation en fonction du rapport pondéral R = F/P (acide formique/acide phosphorique), pour différentes compositions de liquide d'imprégnation, dans le cas d'un échantillon de plaque de cellulose haute densité soumis au test d'imprégnation.

## I. MESURES ET TESTS UTILISES

I-1. Degré de polymérisation

Le degré de polymérisation est noté DP. On mesure le DP de la cellulose de manière connue, cette cellulose étant sous forme de poudre, ou transformée préalablement en poudre.

On détermine tout d'abord la viscosité inhérente (IV) de la cellulose en solution, selon la norme suisse SNV 195 598 de 1970, mais à différentes concentrations qui varient entre 0,5 et 0,05 g/dl. La viscosité inhérente est définie par l'équation:

$$IV = (1/C) \times Ln(t_1/t_0)$$

dans laquelle C représente la concentration en cellulose sèche, $t_1$ représente la durée d'écoulement de la solution diluée de polymère, $t_0$ représente la durée d'écoulement du solvant pur, dans un viscosimètre de type Ubbelhode, et Ln représente le logarithme népérien. Les mesures sont réalisées à 20°C.

La viscosité intrinsèque [ η ] est ensuite déterminée par extrapolation à concentration nulle de la viscosité inhérente IV.

La masse moléculaire moyenne en poids $M_w$ est donnée par la relation de Mark-Houwink :

$$[\,\eta\,] = K \times M_w^{\alpha}$$

où les constantes K et $\alpha$ sont respectivement :

K = 5,31 x 10$^{-4}$ ; $\alpha$ = 0.78, ces constantes correspondant au système de solvant utilisé pour la détermination de la viscosité inhérente. Ces valeurs sont données par L. Valtasaari dans le document Tappi 48, 627 (1965).

Le DP est finalement calculé selon la formule :

$$DP = (M_w)/162,$$

162 étant la masse moléculaire du motif élémentaire de la cellulose.

Lorsqu'il s'agit de déterminer le DP de la cellulose à partir de formiate de cellulose en solution, on doit isoler tout d'abord ce formiate, puis régénérer la cellulose. On procède alors comme suit.

On coagule tout d'abord la solution avec de l'eau dans un appareil à disperser. Après filtration et lavage avec de l'acétone, on obtient une poudre qui est ensuite séchée dans une étuve sous vide à 40°C pendant au moins 30 minutes. Après avoir isolé le formiate, on régénère la cellulose en traitant ce formiate à reflux avec de la soude normale. On lave à l'eau la cellulose obtenue, on la sèche et on mesure le DP comme décrit précédemment.

1-2. Degré de substitution

Le degré de substitution de la cellulose en formiate de cellulose, encore appelé degré de formylation, est noté DS.

Le DS déterminé par la méthode décrite ici donne le pourcentage de fonctions alcool de la cellulose qui sont estérifiées, c'est-à-dire transformées en groupes formiate. Ceci signifie qu'un DS de 100 % est obtenu si les trois fonctions alcool du motif de cellulose sont toutes estérifiées, ou qu'un DS de 30 %, par exemple, est obtenu si 0,9 fonction alcool sur trois, en moyenne, est estérifiée.

Le DS est mesuré différemment selon que l'on caractérise du formiate de cellulose en solution, ou des fibres de cellulose régénérées après filage d'une telle solution.

I-2.1. DS dans la solution:

Le formiate de cellulose est tout d'abord isolé de la solution comme indiqué précédemment au paragraphe I.1.

On pèse avec précision 200 mg de formiate de cellulose ainsi isolé et on les introduit dans un erlenmeyer. On ajoute 40 ml d'eau et 2 ml de soude normale (NaOH 1 N). On chauffe à 90°C à reflux pendant 15 minutes sous azote. On régénère ainsi la cellulose en retransformant les groupes formiate en groupes hydroxyle. Après refroidissement, la soude en excès est titrée en retour avec une solution d'acide chlorhydrique décinormale (HCl 0,1 N), et on en déduit ainsi le DS.

I-2.2. DS sur les fibres de cellulose régénérée:

Environ 400 mg de fibre sont coupés en morceaux de 2 à 3 cm de long, et introduits dans un erlenmeyer de 100 ml contenant 50 ml d'eau. On ajoute 1 ml de soude normale (NaOH 1N). L'ensemble est mélangé à température ambiante, pendant 15 minutes. On régénère ainsi complètement la cellulose en transformant en groupes hydroxyle les derniers groupes formiate qui avaient résisté à la régénération conduite, après leur filage, directement sur des fibres continues. La soude en excès est titrée avec une solution d'acide chlorhydrique décinormale (HCl 0,1 N), et on en déduit ainsi le DS.

I-3. Propriétés optiques des solutions

L'isotropie ou l'anisotropie des solutions est déterminée en plaçant une goutte de solution à étudier entre polariseur et analyseur linéaires croisés d'un microscope optique de polarisation, puis en l'observant au repos, c'est-à-dire en l'absence de contrainte dynamique, à la température ambiante. De manière connue, une solution anisotrope dépolarise la lumière, alors que le champ du microscope reste noir dans le cas d'une solution isotrope.

I-4. Propriétés mécaniques des fibres

Par "fibres", on entend ici des fibres multifilamentaires, constituées de manière connue d'un grand nombre de filaments élémentaires de faible diamètre (faible titre). Toutes les propriétés mécaniques ci-dessous sont mesurées sur des fibres ayant été soumises à un conditionnement préalable. Par "conditionnement préalable", on entend le stockage des fibres, avant mesure, dans une atmosphère standard (température de $20 \pm 2\,°C$ ; hygrométrie de $65 \pm 2\,\%$), pendant au moins 24 heures.

Le titre des fibres est déterminé sur au moins trois échantillons, chacun correspondant à une longueur de 50 m, par pesée de cette longueur de fibre. Le titre est donné en tex (poids en grammes de 1000 m de fibre).

Les propriétés mécaniques des fibres (ténacité, module initial et allongement à la rupture) sont mesurées de manière connue à l'aide d'une machine de traction ZWICK GmbH & Co (Allemagne) de type 1435 ou de type 1445. Les fibres, après avoir reçu une faible torsion de protection préalable (angle d'hélice de 6° environ), subissent une traction sur une longueur initiale de 400 mm, à une vitesse de 50 mm/min. Tous les résultats donnés sont une moyenne de 10 mesures.

La ténacité et le module initial sont indiqués en cN par tex (centinewton par tex). L'allongement à la rupture est indiqué en pourcentage. Le module initial est défini comme la pente de la partie linéaire de la courbe force-allongement, qui intervient juste après la prétension standard de 0,5 cN/tex.

I-5. Test d'imprégnation des plaques de cellulose

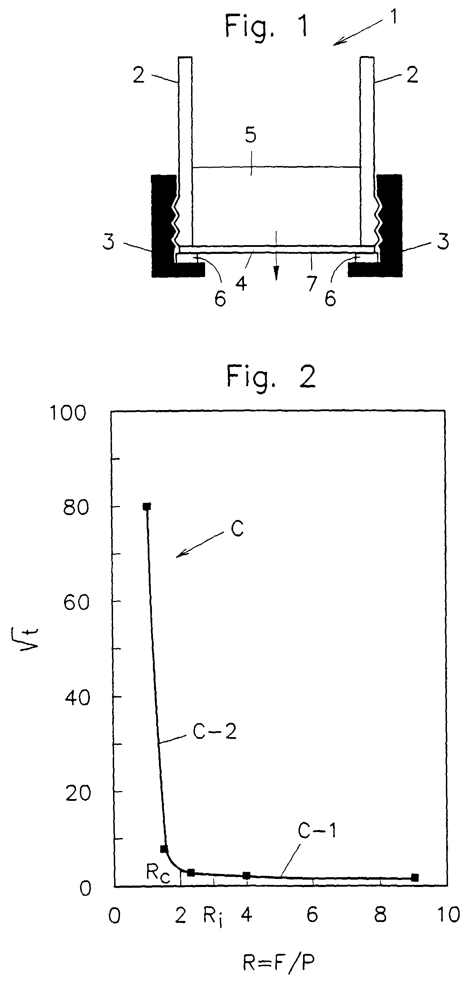

Le présent test, réalisé sur un échantillon de plaque de cellulose, peut être notamment utilisé, préalablement à la mise en oeuvre du procédé de l'invention, comme une aide dans le choix de la composition du liquide d'imprégnation à base d'acide formique. La figure 1 représente, en coupe, un exemple de dispositif permettant de mettre en oeuvre ce test d'imprégnation.

Ce dispositif 1 est essentiellement constitué d'un tube 2 de forme cylindrique, d'un pied-support 3, amovible, maintenant le tube 2 en position verticale, et d'un disque 4 préalablement découpé dans la plaque de cellulose à étudier et constituant ainsi l'échantillon à tester. Comme clairement illustré à la figure 1, ce disque 4, servant de base au tube 2, constitue ainsi positionné le fond d'une enceinte cylindrique dans laquelle sera versé le liquide d'imprégnation 5, un joint torique 6 supportant par exemple le disque 4 et assurant l'étanchéité.

A titre d'exemple, le tube 2 (en verre) et le joint 6 (en silicone) ont un diamètre extérieur de 39 mm, le disque de cellulose 4 un diamètre de 38 mm, et la hauteur totale du dispositif est de 150 mm environ. Bien entendu, l'échantillon de cellulose pourrait être constitué de plusieurs disques superposés. En règle générale, l'échantillon à tester a la même épaisseur que la plaque dans laquelle il est découpé.

Une fois l'échantillon à tester mis en place dans le dispositif 1, on verse le liquide d'imprégnation 5 (environ 50 ml) très rapidement, et on déclenche un chronomètre. On laisse s'imprégner ainsi l'échantillon, par simple contact, et on mesure le temps d'imprégnation moyen (noté "t") du disque 4 (au moins 3 mesures), c'est-à-dire le temps nécessaire pour imprégner complètement le disque 4 de cellulose, jusqu'à ce que sa face inférieure 7 soit elle-même totalement mouillée par le liquide. Une simple appréciation visuelle s'avère d'une précision suffisante : on obtient par exemple un écart-type inférieur à 10 % du temps "t" (coefficient de variation inférieur à 10 %) pour des temps d'imprégnation supérieurs à 10 secondes. Un miroir placé sous le dispositif 1 (non représenté à la figure 1) facilite l'observation et la mesure.

Le test d'imprégnation permet d'étudier l'incidence de différents paramètres expérimentaux sur l'aptitude du liquide d'imprégnation à imprégner une plaque donnée, notamment sur la cinétique de pénétration du liquide, ces paramètres expérimentaux pouvant être par exemple l'épaisseur ou la densité des plaques, la composition du liquide ou encore sa température.

Un test d'imprégnation peut être notamment réalisé, de manière préalable, lorsqu'on souhaite utiliser, dans le procédé de l'invention, un liquide d'imprégnation contenant de l'acide phosphorique. Comme expliqué par la suite, un rapport pondéral (acide formique/acide phosphorique) critique, noté $R_c$, peut être déterminé grâce au test, rapport en dessous duquel l'imprégnation de la plaque de cellulose est perturbée, voire même bloquée, en raison d'un taux trop élevé d'acide phosphorique dans le liquide d'imprégnation. La détermination du rapport $R_c$ permet alors de définir, pour le liquide d'imprégnation, un domaine de rapport pondéral (acide formique/acide phosphorique) préférentiel.

De préférence, les disques de cellulose sont conditionnés avant le test de manière à travailler avec des conditions initiales de température et d'humidité constantes.

Il va de soi que les temps d'imprégnation mesurés dans ce test sont propres aux conditions spécifiques du test, telles que décrites ci-dessus, le test n'ayant pas vocation de reproduire ni de simuler les conditions réelles et particulières de réalisation de l'invention.

## II. CONDITIONS DE REALISATION DE L'INVENTION

II-1. Remarques préliminaires

Le procédé conforme à l'invention s'applique à tout type de solution de formiate de cellulose. Par "solution", on entend ici, de manière connue, une composition liquide, homogène, dans laquelle aucune particule solide n'est visible à l'oeil nu.

Les solutions conformes à l'invention peuvent être par exemple filables (prêtes à filer) ou non filables, faiblement ou fortement concentrées en cellulose, optiquement isotropes ou anisotropes. Ainsi, le procédé peut être mis en oeuvre selon des conditions particulières qui peuvent largement différer en fonction des solutions réalisées et des applications envisagées.

Comme expliqué dans la suite de la description, la mise en oeuvre de l'invention nécessite, en raison de l'emploi de plaques de cellulose, des proportions initiales de cellulose. d'acide formique et d'acide phosphorique qui ne sont pas, dans la majorité des cas. les proportions visées pour la solution finale. Ceci est notamment vrai pour l'obtention de solutions prêtes à filer, c'est-à-dire de solutions pouvant être transférées directement vers une machine de filage pour y être immédiatement filées. Dans un tel cas. on peut être conduit en effet à employer un excès notable d'acide formique au cours de l'étape d'imprégnation.

Il est par conséquent nécessaire d'éliminer cet excès d'acide formique, c'est-à-dire d'ajuster la composition de la solution, avant la fin du procédé. Le procédé de l'invention est alors mis en oeuvre de manière à vérifier, à la fin du procédé, les deux relations suivantes dans la solution finale:

$$(1): K_o = C_o/(C_o+F_o+P_o+X_o) \; ; (2): R_o = (F_o/P_o),$$

avec:

$C_o$ :   parties en poids de cellulose, sur la base d'une cellulose non estérifiée;
$F_o$ :   parties en poids d'acide formique total, cet acide formique étant soit sous forme de formiate, soit sous forme d'acide formique libre;
$P_o$ :   parties en poids d'acide phosphorique;
$X_o$ :   parties en poids d'autres constituants éventuels;
$K_o$ :   valeur prédéfinie d'ajustement de la concentration en cellulose:
$R_o$ :   valeur prédéfinie d'ajustement du rapport pondéral des acides formique et phosphorique.

Toutes les valeurs des relations (1) et (2) ci-dessus ne concernent donc que la solution finale, telle qu'elle est obtenue à la fin du procédé. Pour simplification, les conventions suivantes sont appliquées:

-   les parties en poids indiquées ci-dessus sont des valeurs brutes, non corrigées de la teneur initiale en eau des différents constituants;

-   le degré de substitution de la cellulose n'étant pas connu à priori, seul le poids correspondant à une cellulose non estérifiée est pris en compte pour la définition des valeurs $K_o$ et $C_o$, qu'il y ait ou non estérification des fonctions alcool, la part d'eau formée au cours de cette estérification, elle-même non connue à priori, n'étant donc pas prise en compte non plus;

-   pour la même raison que ci-dessus, on entend par acide formique total la part d'acide formique consommée pour l'estérification, plus la part d'acide formique libre restant dans la solution finale;

-   les termes "acide formique" et "acide phosphorique" sont à considérer ici dans un sens général englobant les cas où le premier de ces deux acides peut contenir, à l'état initial, au moins un autre acide organique et/ou le second de ces deux acides peut contenir au moins un autre acide minéral, ce ou ces autres acides étant alors présents en faible proportion;

-   le paramètre $X_o$ ci-dessus regroupe divers autres constituants, non indispensables pour la mise en oeuvre de l'invention mais pouvant être éventuellement ajoutés aux trois matières de base (cellulose, acide formique, acide phosphorique), par exemple pour améliorer l'imprégnation des plaques ou leur malaxage, pour modifier ou améliorer certaines propriétés des solutions obtenues, ou des fibres filées à partir de ces solutions lorsqu'il s'agit de solutions filables, ces constituants supplémentaires étant de préférence non réactifs. ou peu réactifs avec les trois matières de base.

L'importance des paramètres $K_o$ et $R_o$ définis dans les relations (1) et (2) ci-dessus est connue de l'homme du métier. La concentration en cellulose ($K_o$) joue un rôle majeur sur les caractéristiques de filabilité de la solution finale, ses propriétés optiques (anisotropie ou isotropie), et sur le choix de nombreux paramètres de filage, par exemple pour l'obtention de fibres possédant des caractéristiques données de titre et de propriétés mécaniques. Le rapport pondéral des deux acides ($R_o$) permet notamment d'ajuster sensiblement le degré de substitution de la cellulose en formiate (voir le brevet EP-B-179 822 précité), mais également la viscosité de la solution, et donc sa filabilité. Ce rapport influe donc sur le réglage de certains paramètres de filage, tels que la température de filage ou le facteur d'étirage au filage par exemple.

II-2. Matières premières

Les trois matières premières de base sont des plaques de cellulose, de l'acide formique et de l'acide phosphorique.

II-2.1. Plaques de cellulose

Le procédé conforme à l'invention est mis en oeuvre en partant directement de plaques de cellulose.

Conformément à la description précédente, on entend par "plaques de cellulose" des plaques de cellulose brutes telles qu'elles peuvent être industriellement disponibles, mais également toutes feuilles de cellulose présentant une structure fibreuse cohérente à coeur, et dont l'épaisseur et la densité ont des valeurs équivalentes à celles de ces plaques brutes.

Ces feuilles peuvent être homogènes ou non homogènes en densité et en épaisseur, pleines ou présentant au contraire des discontinuités notables de densité. Il peut s'agir par exemple de plaques obtenues après un traitement ou un travail préalable des plaques brutes d'origine, par exemple un traitement de surface, un poinçonnage, une opération de restructuration telle qu'une compression des plaques permettant d'augmenter leur densité.

L'invention s'applique à fortiori à des morceaux des plaques ou des feuilles ci-dessus. On entend donc également par "plaques", de manière générale, ces éléments de taille réduite, obtenus par exemple par découpage, n'ayant subi eux-mêmes. au cours de leur préparation, aucune action notable de désagrégation ou déstructuration à coeur, avant mise en contact avec le liquide d'imprégnation.

Il pourrait être en effet nécessaire à l'homme du métier, dans certains cas, de découper des plaques brutes de surface trop importante avant ou pendant la mise en oeuvre du procédé, par exemple de transformer en plusieurs bandelettes parallèles des bandes continues de largeur trop importante, ceci pour faciliter par exemple leur entrée dans une trémie, ou encore leur transfert en continu et automatique à travers les moyens d'imprégnation et/ou les moyens de malaxage.

Bien entendu. la taille minimale de ces plaques n'est pas un paramètre critique du procédé. Cependant. de manière préférentielle, le procédé est mis en oeuvre avec des plaques dites "entières", c'est-à-dire présentant, dans leur plan, des dimensions notablement élevées, à savoir:

-   soit une surface, pour chaque face, supérieure à 100 $cm^2$, plus préférentiellement supérieure à 500 $cm^2$, si ces plaques entières se présentent sous une forme coupée, rectangulaire et plate;

-   soit une longueur supérieure à 10 m, plus préférentiellement supérieure à 50 m, si ces plaques entières se présentent en bandes ou bandelettes continues enroulées sur elles-mêmes, ces bandes ou bandelettes continues ayant alors une largeur de préférence supérieure à 0,5 cm, plus préférentiellement supérieure à 2,5 cm.

De manière à faciliter les opérations d'imprégnation puis de malaxage de ces plaques, et de réduire ainsi les temps nécessaires à l'obtention des solutions, le procédé est de préférence mis en oeuvre en partant de plaques dont la masse volumique est inférieure à 1,1 $g/cm^3$, plus préférentiellement inférieure à 0,9 $g/cm^3$, et dont l'épaisseur est inférieure à 5 mm, plus préférentiellement inférieure à 3 mm.

Les limites inférieures de ces deux paramètres ne sont pas critiques pour le procédé. Cependant, pour des raisons économiques, ces plaques ont avantageusement une épaisseur supérieure à 0,2 mm, plus préférentiellement supérieure à 0,4 mm, et une masse volumique supérieure à 0,2 $g/cm^3$.

Toutes les valeurs de masse volumique et d'épaisseur indiquées ci-dessus s'entendent comme des valeurs moyennes sur les plaques, ces dernières pouvant être plus ou moins homogènes en masse volumique et/ou en épaisseur.

Avantageusement, le procédé est mis en oeuvre avec des plaques haute densité (masse volumique au moins égale à 0,5 $g/cm^3$), plus homogènes en général, plus compactes et industriellement plus attractives.

Les plaques utilisées ont une teneur initiale en eau qui est de préférence inférieure à 10 % en poids, de manière encore plus préférentielle inférieure à 8 % en poids.

II-2.2. Acide formique et acide phosphorique

De manière connue (voir le brevet EP-B-179 822 précité), l'acide formique est ici l'acide d'estérification, et l'acide phosphorique est le solvant du système. Les deux acides sont éventuellement utilisés prémélangés dans le liquide d'imprégnation.

Le procédé est mis en oeuvre sans se limiter à l'emploi de ces deux acides seuls pris à l'état pur.

C'est ainsi, par exemple, que l'acide formique peut contenir, en faibles proportions, d'autres acides organiques monocarboxyliques, non aromatiques, par exemple l'acide acétique ou l'acide butyrique, les anhydrides ou anhydrides mixtes de ces acides, ainsi que les halogénures de ces acides, par exemple des chlorures, ces acides, ces anhydrides et ces halogénures pouvant comporter des groupes de substitution, par exemple des groupes halogènes, des groupes alcoyles.

L'acide phosphorique peut contenir également, en faibles proportions, d'autres acides minéraux, tels que l'acide sulfurique ou l'acide chlorhydrique par exemple. En général, l'acide phosphorique utilisé est de l'acide orthophosphorique ($H_3PO_4$), mais on peut utiliser d'autres acides phosphoriques, ou un mélange d'acides phosphoriques. L'acide phosphorique peut, selon les cas, être utilisé solide, à l'état liquide, ou bien dissous dans l'acide formique.

De préférence, l'acide formique et l'acide phosphorique contiennent chacun moins de 10 % en poids, de manière encore plus préférentielle moins de 5 % en poids, de ces autres constituants.

La teneur en eau de ces deux acides est de préférence inférieure à 5 % en poids, de manière encore plus préférentielle inférieure à 3 % en poids. Cependant, l'absence d'eau dans les acides, qui n'est d'ailleurs pas réaliste du point de vue industriel en raison du recyclage de ces acides, n'est pas souhaitable, de l'eau en faible quantité apparaissant comme un facteur plutôt favorable à la dissolution de la cellulose. De préférence, les acides contiennent plus de 1 % en poids d'eau.

Lorsque les deux acides sont au contact l'un de l'autre, on exprime, dans le cas général. et sauf relation particulière différente indiquée de manière expresse, leur rapport pondéral comme suit:

$$R = (F/P), \text{ avec:}$$

- F : parties en poids d'acide formique, l'acide formique étant alors soit sous forme d'acide formique libre, soit sous forme de formiate, comme indiqué précédemment pour $F_o$;

- P : parties en poids d'acide phosphorique.

II-3. Mise en solution des plaques

La mise en solution des plaques de cellulose est obtenue grâce à une étape préalable d'imprégnation, suivie d'une étape de malaxage de ces plaques, étapes auxquelles on ajoute éventuellement des opérations d'ajustement pour vérifier, à la fin du procédé, les relations (1) et (2) précitées.

II-3.1. Imprégnation des plaques

a) Généralités:

L'étape d'imprégnation préalable est réalisée en général par simple contact avec un liquide d'imprégnation à base d'acide formique, c'est-à-dire sans nécessiter l'emploi de forces externes pour faire pénétrer le liquide à l'intérieur des plaques.

Le liquide d'imprégnation peut contenir ou non une certaine proportion d'acide phosphorique. De manière préférentielle, le liquide d'imprégnation est constitué à plus de 90 % en poids d'acide formique ou d'un mélange de ces deux acides.

Ce liquide peut être utilisé à température ambiante ou non, par exemple à une température supérieure à la température ambiante, de manière à abaisser par exemple sa tension superficielle et à faciliter ainsi l'imprégnation des plaques.

Cette phase d'imprégnation peut être conduite à l'aide de différents moyens connus. On peut par exemple imprégner les plaques, en discontinu, dans une trémie. On peut également opérer par défilement en continu dans un bain contenant le liquide d'imprégnation, lorsque les plaques se présentent en rouleaux, sous forme de bandes ou de bandelettes continues de longueur notable. De telles bandes ou bandelettes pourraient être aboutées automatiquement à l'entrée des moyens d'imprégnation, afin de traiter en continu des quantités encore plus importantes de produit. On peut encore mettre en oeuvre cette étape par projection du liquide d'imprégnation sur les plaques en mouvement.

L'imprégnation doit être complète, c'est-à-dire conduire à une pénétration totale du liquide d'imprégnation dans la plaque, jusqu'à coeur, ceci signifiant que les espaces vides inter-fibres sont alors remplis, de manière substantielle, du liquide d'imprégnation.

Il est bien sûr nécessaire que le liquide d'imprégnation soit en quantité suffisante. L'homme du métier saura adapter cette quantité après lecture de la description et des exemples de réalisation qui suivent, en prenant notamment en compte l'épaisseur et la densité des plaques utilisées, les moyens techniques employés, ainsi que les durées d'obtention visées pour les solutions.

En particulier, lorsque l'imprégnation est réalisée en discontinu, par exemple sur des plaques coupées, dans une trémie, on préfère utiliser un excès pondéral de liquide par rapport au solide (plaques de cellulose), c'est-à-dire vérifier la relation qui suit:

$$(L/S) > 1 ,$$

avec

    L : parties en poids de liquide;
    S : parties en poids de solide.

Plus préférentiellement, lorsque des plaques haute densité sont utilisées, on a:

$$(L/S) > 2 ,$$

et encore plus préférentiellement:

$$(L/S) > 3.$$

La durée d'imprégnation des plaques, avant l'opération de malaxage, est généralement comprise entre quelques secondes et 1,5 heures, préférentiellement entre quelques secondes et 10 minutes, ces durées variant selon les conditions particulières de réalisation.

L'acide formique joue un rôle majeur dans la mise en oeuvre du procédé de l'invention. L'expérience révèle par exemple que de l'acide formique seul, mis en contact avec des plaques de cellulose, est absorbé très rapidement, quasiinstantanément dans la plupart des cas (quelques secondes à 1 minute), diffusant et pénétrant jusqu'au coeur de ces plaques en les imprégnant complètement. C'est ainsi qu'une plaque haute densité, par exemple d'épaisseur 1 mm, ayant l'apparence d'un carton dur et épais, peut en moins de 10 secondes prendre l'apparence d'un buvard de 2 à 3 mm d'épaisseur, ayant la consistance d'une ouate humide.

On pense que, grâce à cette action spécifique de l'acide formique, on va pouvoir obtenir une pénétration complète et aisée de l'acide phosphorique, et rendre ainsi possible une mise en solution rapide ainsi qu'une formylation optimale de la cellulose lors du malaxage qui suivra, ceci en partant, de manière tout à fait inattendue, directement de plaques de cellulose.

b) Rapport pondéral d'imprégnation :

En règle générale, lorsque l'imprégnation est réalisée par simple contact, plus la densité des plaques est élevée, plus leur imprégnation apparaît facilitée par un taux élevé d'acide formique dans le liquide d'imprégnation.

En particulier, si de l'acide phosphorique est présent dans le liquide d'imprégnation, on utilise généralement un excès d'acide formique: on entend par là un rapport pondéral (acide formique/acide phosphorique) supérieur au rapport pondéral $R_o$ choisi pour la solution finale.

Le rapport pondéral des deux acides, dans le liquide d'imprégnation tel que choisi finalement pour la mise en oeuvre de l'invention, est par convention noté $R_i$ et défini par la relation qui suit:

$$R_i = (F_i/P_i), \text{ avec :}$$

$F_i$ : parties en poids d'acide formique;

$P_i$ : parties en poids d'acide phosphorique,

$R_i$ étant dit "rapport pondéral d'imprégnation".

$R_i$ est donc la valeur particulière du rapport pondéral R = (F/P), correspondant aux conditions réelles et effectives de réalisation de l'invention.

La détermination d'une valeur optimale de $R_i$, pour la mise en oeuvre du procédé de l'invention, peut se faire expérimentalement, de manière simple pour un homme du métier, par des essais successifs d'imprégnation et/ou de mise en solution des plaques considérées, soit en grandeur réelle, soit de préférence dans des dispositifs de laboratoire de plus petite taille.

De manière générale, comme on peut le constater notamment à travers de tels essais, l'utilisation d'acide formique sans acide phosphorique, ou d'un excès d'acide formique ($R_i > R_o$) lorsqu'on emploie un mélange des deux acides, facilite et accélère l'imprégnation des plaques, ceci étant d'autant plus vrai que la densité de ces dernières est élevée. On suppose que de telles conditions permettent d'une part une diffusion plus rapide du liquide d'imprégnation, et limitent d'autre part les risques, en présence d'un taux trop élevé d'acide phosphorique, d'une dissolution trop rapide à la surface des plaques avec formation possible d'une sorte de gel, ralentissant ou bloquant même la pénétration du liquide jusqu'à coeur.

De manière générale, pour des plaques haute densité, l'invention est donc mise en oeuvre avec un excès d'acide formique, c'est-à-dire que l'on a la relation suivante:

$$R_i > R_o.$$

De préférence, pour des plaques haute densité ayant une masse volumique sensiblement supérieure à 0,5 g/cm$^3$, par exemple de l'ordre de 0,7 g/cm$^3$ ou plus, on a la relation suivante :

$$(R_i/R_o) \geq 10.$$

De telles relations peuvent s'appliquer, à fortiori, à des plaques basse densité. Cependant, leur moindre compacité les rend plus facilement accessibles aux réactifs, et donc plus facilement imprégnables. L'expérience révèle en effet que l'emploi d'acide formique seul, ou en excès dans le cas d'un mélange, n'est en général pas nécessaire pour de telles plaques. En particulier, si la masse volumique des plaques est sensiblement inférieure à 0,5 g/cm$^3$, par exemple de l'ordre de 0,4 g/cm$^3$ ou moins, on peut alors utiliser, de manière avantageuse, un liquide d'imprégnation dont le rapport pondéral $R_i$ est déjà ajusté à la valeur prédéfinie $R_o$. On applique alors la relation:

$$R_i = R_o \, ,$$

et on limite ainsi les opérations d'ajustement ultérieures uniquement à la valeur prédéfinie $K_o$ pour la concentration en cellulose.

La détermination d'une valeur optimale de $R_i$, pour la mise en oeuvre du procédé, peut encore se faire en utilisant des tests simples d'imprégnation d'échantillons de plaques, prenant en compte les conditions particulières de mise en oeuvre de l'invention (par exemple, épaisseur ou densité des plaques, composition ou température du liquide).

Le choix du rapport Ri, notamment dans le cas de plaques de haute densité, peut se faire par exemple en soumettant les plaques au test d'imprégnation décrit au paragraphe I-5 du chapitre I. Des échantillons de ces plaques sont soumis à une série de tests dans lesquels on diminue progressivement le rapport pondéral R = F/P (acide formique/acide phosphorique) dans les liquides d'imprégnation testés, tout en mesurant le temps d'imprégnation pour chacun de ces liquides.

La figure 2 représente par exemple le résultat d'une telle série de tests menée sur des plaques haute densité (masse volumique égale à 0,7 g/cm$^3$). La racine carré du temps d'imprégnation ("t" exprimé en seconde), en ordonnées, est reportée en fonction du rapport pondéral R = (F/P), en abcisses, selon la courbe C.

Partant par exemple d'un rapport R égal à 9, on constate tout d'abord qu'une augmentation du taux d'acide phosphorique (diminution de R) a peu d'incidence sur la durée d'imprégnation (partie C-1 de la courbe). Puis, on observe un changement brutal de pente (partie C-2 de la courbe), le temps nécessaire à l'imprégnation augmentant alors très fortement pour de faibles diminutions du rapport pondéral R. Le test d'imprégnation révèle donc ici l'existence d'un rapport pondéral critique, noté $R_c$ et égal à 2 environ, en dessous duquel le liquide d'imprégnation se révèle d'une efficacité nettement diminuée pour l'imprégnation des plaques considérées.

La constatation ci-dessus se trouve en bonne corrélation avec les observations faites au cours d'expériences de mise en solution des plaques, en grandeur réelle. Comme expliqué précédemment, on suppose qu'un tel phénomène est dû lorsque l'acide phosphorique est présent en trop grande quantité, à une action dissolvante excessive du liquide d'imprégnation, action qui va freiner plus ou moins, voire même bloquer, la pénétration complète dudit liquide jusqu'à coeur, suite à la formation d'une sorte de gel à la surface, ou à une certaine profondeur des plaques.

En conséquence, suite au test d'imprégnation ci-dessus, la composition du liquide d'imprégnation est choisie de manière à vérifier la relation suivante:

$$R_i > R_c .$$

Dans le cas particulier où le domaine préférentiel ainsi déterminé ($R_i>R_c$) contient la valeur prédéfinie Ro pour la solution finale (soit $R_o>R_c$), on utilise alors de manière avantageuse un liquide dont le rapport pondéral d'imprégnation $R_i$ est égal à $R_o$. Ce cas peut se présenter lorsqu'on utilise des plaques de basse densité, plus faciles à imprégner.

Dans le cas général où ce domaine préférentiel ne contient pas la valeur $R_o$, on utilise alors une valeur $R_i$ incluse dans ce domaine préférentiel (par exemple $R_i$ égal à 3 dans le cas correspondant à la figure 2).

Il est à noter qu'il n'est pas nécessaire de choisir une valeur Ri aussi proche que possible de la valeur $R_c$, c'est-à-dire de choisir un excès d'acide formique aussi faible que possible, compte-tenu de l'opération d'ajustement qui devra nécessairement suivre, opération au cours de laquelle le rapport pondéral des deux acides sera finalement ajusté à la valeur $R_o$, notamment par ajout de la quantité nécessaire d'acide phosphorique.

L'homme du métier saura donc, à la lecture de cette description et des exemples de réalisation qui suivent (Chapitre III), déterminer une valeur optimale pour le rapport pondéral d'imprégnation $R_i$, selon les conditions particulières de réalisation. En particulier, pourront également être pris en compte, dans le choix final des conditions d'imprégnation, des paramètres technologiques non directement liés aux propriétés de la plaque ou du liquide d'imprégnation, par exemple la vitesse d'alimentation d'une installation de filage disposée, en ligne, à la sortie des moyens de malaxage.

Au cours de la seule étape d'imprégnation, par exemple avec de l'acide formique seul, le degré de substitution de la cellulose n'excède pas des valeurs de l'ordre de 12 %, en raison d'une formylation non homogène sur une cellulose certes imprégnée, mais non dissoute (zones cristallines difficilement accessibles). C'est au cours de l'étape de malaxage qui va suivre que la formylation optimale de la cellulose, ainsi que la dissolution totale des plaques, vont pouvoir être obtenues.

II-3.2. Ajustement

Après l'étape d'imprégnation préliminaire décrite dans le paragraphe II-3.1. précédent, on ajuste, si cela n'est pas déjà fait, la concentration en cellulose et le rapport pondéral des deux acides de manière à vérifier, à la fin du procédé, les relations (1) et (2) précitées.

Ces deux opérations d'ajustement aux valeurs $K_o$ et $R_o$, mises en oeuvre simultanément ou non, peuvent être réalisées avant et/ou pendant le malaxage s'il s'agit d'ajouter des constituants, avant et/ou pendant et/ou après le malaxage s'il s'agit d'en enlever, à la condition cependant que le malaxage soit opéré sur des plaques qui sont au contact à la fois de l'acide formique et de l'acide phosphorique.

Deux cas différents doivent être considérés, pour ces opérations d'ajustement, selon que le liquide d'imprégnation contient ou non de l'acide phosphorique.

a) Liquide d'imprégnation sans acide phosphorique:

Dans un tel cas, on doit ajouter tout l'acide phosphorique, et enlever si nécessaire de l'acide formique, de manière à vérifier les relations (1) et (2) dans la solution finale.

A titre d'exemple, on peut opérer ainsi:

Les plaques, préalablement imprégnées en discontinu dans une trémie, sont ensuite transférées vers les moyens de malaxage équipés d'un dispositif pour faire le vide, auxquels on incorpore la quantité d'acide phosphorique nécessaire pour la solution finale ($P_o$). On commence alors l'opération de malaxage. Si de l'acide formique est alors en excès par rapport à la quantité $F_o$ prédéfinie pour la solution finale (soit $R>R_o$), ce qui est généralement le cas si on a utilisé un excès notable de liquide pour l'étape d'imprégnation (valeur élevée du rapport L/S précité), cet excès peut être éliminé, pendant et/ou après le malaxage, par simple évacuation sous vide, grâce au caractère relativement volatil de l'acide formique.

b) Liquide d'imprégnation avec acide phosphorique:

- cas général : Ri différent de Ro.

Comme expliqué précédemment, l'imprégnation a été réalisée dans le cas général, notamment pour des plaques haute densité, avec un liquide présentant un rapport pondéral d'imprégnation $R_i$ supérieur au rapport pondéral $R_o$ prédéfini pour la solution finale.

On doit alors ajouter de l'acide phosphorique et/ou enlever de l'acide formique, de manière à vérifier les relations (1) et (2) dans la solution finale.

A titre d'exemple, on peut opérer ainsi: les plaques, coupées ou en bandes continues, sont placées dans une trémie pour imprégnation. Elles sont ensuite transférées, par exemple vidées directement, dans les moyens de malaxage équipés d'un dispositif pour faire le vide. On ajoute alors, avant et/ou pendant le malaxage, la quantité manquante d'acide phosphorique et/ou on enlève, pendant et/ou après le malaxage, la quantité d'acide formique en excès, par évacuation sous vide.

On peut également procéder comme suit: une plaque continue, sous forme de bande, est préalablement imprégnée par défilement en continu dans un bain, puis essorée, en sortie de ce bain, par passage forcé entre deux rouleaux presseurs dont la distance, et donc la pression d'essorage, sont préréglées. La quantité de liquide exprimée de la plaque est ainsi ajustée de manière à ne conserver dans ladite plaque, en ce qui concerne l'acide formique, que la part nécessaire $F_o$ pour une quantité donnée $C_o$ de cellulose. L'acide phosphorique se trouvant alors toujours en déficit ($R>R_o$), il reste alors à ajouter la quantité manquante de cet acide, pendant le transfert des plaques ainsi imprégnées vers les moyens de malaxage, ou dans ces moyens eux-mêmes.

Une alternative au cas ci-dessus est l'élimination par essorage de l'excès de liquide d'imprégnation, de manière à ne conserver dans la plaque, en ce qui concerne l'acide phosphorique, que la part nécessaire $P_o$ pour une quantité donnée $C_o$ de cellulose. L'acide formique se trouvant alors toujours en excès dans la plaque ($R>R_o$), cet excès est éliminé plus tard, par évacuation sous vide, pendant et/ou après le malaxage.

- cas particulier : Ri égal à Ro.

Comme expliqué précédemment, dans le cas particulier de plaques basse densité, ayant notamment une masse volumique sensiblement inférieure à 0,5 g/cm$^3$, par exemple de l'ordre de 0,4 g/cm$^3$ ou moins, ou dans le cas particulier où le domaine préférentiel déterminé par le test d'imprégnation contient la valeur prédéfinie $R_o$ (soit $R_o>R_c$), on peut alors utiliser, de manière avantageuse, un liquide d'imprégnation tel que le rapport $R_i$ est déjà ajusté à cette valeur $R_o$.

L'opération d'ajustement se limite alors à la valeur prédéfinie pour la concentration en cellulose ($K_o$). Cet ajustement est réalisé simplement en enlevant du liquide d'imprégnation, voire, si cela s'avérait nécessaire, en ajoutant un tel liquide.

A titre d'exemple, on peut opérer ainsi:

Une plaque continue, sous forme de bande, est préalablement imprégnée par défilement en continu dans un bain, puis essorée en sortie de ce bain par passage entre deux rouleaux presseurs, comme décrit précédemment. On ne conserve ainsi que la quantité de liquide nécessaire pour une quantité donnée ($C_o$) de cellulose .

Cet ajustement de la concentration en cellulose à la valeur $K_o$ peut d'ailleurs ne pas être nécessaire dans le cas particulier où le procédé a pu être mis en oeuvre avec des quantités de cellulose et de liquide d'imprégnation ajustées dès le départ, par exemple en ayant versé directement dans une trémie la quantité de liquide nécessaire sur la quantité $C_o$ de cellulose correspondante.

Après lecture de la description et des exemples de réalisation qui suivent, l'homme du métier saura définir le moment opportun pour ces opérations d'ajustement, selon les conditions particulières de réalisation, en prenant notamment en compte la composition du liquide d'imprégnation (présence ou non d'acide phosphorique), la densité des plaques, les moyens techniques d'imprégnation ou de malaxage employés.

II-3.3. Malaxage et obtention des solutions

Le transfert des plaques des moyens d'imprégnation dans les moyens de malaxage, si ces moyens diffèrent, est réalisé par tout moyen connu et adapté aux conditions particulières de réalisation de l'invention, par exemple en vidant directement les plaques d'une trémie dans un mélangeur placé en dessous, en utilisant une bande transporteuse, en faisant défiler simplement les plaques lorsqu'elles se présentent sous forme de bandes continues.

L'entrée dans les moyens de malaxage peut se faire directement, ou par l'intermédiaire d'une vis d'alimentation par exemple. Au cours de ce transfert vers les moyens de malaxage, la forme des plaques peut être adaptée, si nécessaire, pour faciliter leur entrée dans lesdits moyens, par exemple en repliant sur elles-mêmes, ou encore en découpant en bandelettes plus étroites, des bandes continues de largeur trop importante. Ou pourrait envisager également de superposer ces bandes continues, à la sortie des moyens d'imprégnation, afin d'augmenter le débit à travers les moyens de malaxage.

Le malaxage est opéré sur des plaques qui sont au contact à la fois de l'acide formique et de l'acide phosphorique, la présence d'acide phosphorique étant nécessaire dès le début du malaxage, en raison de son action lubrifiante qui facilite la réalisation du mélange.

Les moyens de malaxage appropriés sont connus de l'homme du métier. Ils doivent être aptes à pétrir, malaxer correctement, de préférence à une vitesse réglable, la plaque de cellulose imprégnée de son liquide, jusqu'à l'obtention de la solution. Le malaxage peut être conduit par exemple dans un mélangeur comportant des bras en Z, ou dans un mélangeur à vis en continu. Ces moyens de malaxage, selon les besoins, peuvent être équipés d'un dispositif d'évacuation sous vide, et/ou d'un dispositif de chauffage et refroidissement permettant d'ajuster la température du mélangeur et de son contenu, afin d'accélérer par exemple les opérations de malaxage elles-mêmes, de contrôler la température de la solution en cours de formation, de faciliter l'évacuation sous vide de l'acide formique.

De préférence, la durée de malaxage est comprise entre 15 minutes et 1,5 heures.

Les solutions conformes à l'invention peuvent être préparées comme décrit précédemment, sans aucune autre transformation sur les plaques de cellulose que les opérations d'imprégnation et de malaxage, auxquelles il convient d'ajouter les phases d'ajustement quand elles sont nécessaires, notamment dans le cas de solutions prêtes à filer.

D'autre part, les temps d'obtention de ces solutions sont particulièrement courts, si on les compare à ceux de procédés connus mis en oeuvre à partir de plaques pour l'obtention de solutions filables de dérivés cellulosiques, tels que le procédé viscose par exemple.

De préférence, le procédé conforme à l'invention vérifie la relation suivante:

$$T_{sol} < 3,$$

$T_{sol}$ étant le temps de mise en solution des plaques (exprimé en heure), c'est-à-dire la durée totale de mise en oeuvre du procédé conforme à l'invention.

De manière plus préférentielle, on a : $T_{sol} < 1$ .

De manière encore plus préférentielle, on a : $T_{sol} < 0,5$ .


II-4. Utilisation des solutions

Les solutions obtenues peuvent être utilisées pour obtenir différents objets ou articles finis en formiate de cellulose, ou en cellulose régénérée à partir de ce formiate.

A titre d'exemple. les solutions obtenues peuvent être extrudées hors du mélangeur, à travers une plaque percée de trous, de manière à obtenir des joncs liquides de diamètre important (par exemple de l'ordre du millimètre) que l'on plonge ensuite dans de l'eau pour coagulation et lavage neutre, puis que l'on sèche avec de l'air chaud. On obtient ainsi des joncs de formiate de cellulose solides.

On peut également obtenir par cette technique des joncs plus fins (de diamètre de l'ordre du dixième de millimètre par exemple), voire des fibres grossières sous forme de bourre de formiate de cellulose.

On peut également envisager de donner aux solutions des formes spécifiques, par exemple par des techniques de coulée. de pressage, puis de les coaguler, laver et sécher de manière à obtenir des objets en formiate de cellulose, par exemple des plaques de formiate de cellulose.

La réalisation de films minces est également possible, par exemple en extrudant la solution sur des cylindres d'une calandre.

Les solutions obtenues sont de préférence des solutions prêtes à filer, c'est-à-dire des solutions pouvant être transférées directement, par exemple par l'intermédiaire d'une vis d'extrusion placée à la sortie du mélangeur, vers une machine de filage pour y être filées, sans autre transformation préalable que des opérations habituelles telles que dégazage ou filtration par exemple.

Ces solutions peuvent être alors filées selon des techniques connues, telles que les méthodes de filage "au mouillé" (filière immergée dans le bain de coagulation) ou de filage "dry-jet-wet" (emploi d'une couche non coagulante).

Lorsque les solutions conformes à l'invention sont des solutions prêtes à filer, filables notamment selon la technique du dry-jet-wet, elles ont de préférence au moins une des caractéristiques suivantes:

- leur concentration en cellulose est comprise entre 10 % et 35 %, de manière plus préférentielle entre 15 % et 25 % (% en poids);

- leur concentration en acide formique total est comprise entre 5 % et 50 %, de manière plus préférentielle entre 15 % et 25 % (% en poids);

- leur concentration en acide phosphorique est comprise entre 85 % et 15 %, de manière plus préférentielle entre 70 % et 50 % (% en poids);

- le degré de substitution de la cellulose est supérieur à 20 %, de manière plus préférentielle compris entre 25 % et 50 %, de manière encore plus préférentielle compris entre 30 % et 45 %;

- elles sont optiquement anisotropes.

## III. EXEMPLES DE REALISATION DE L'INVENTION

Les essais décrits ci-après peuvent être soit des essais conformes à l'invention, soit des essais non conformes à l'invention.

III-1. Essai A

Cet exemple décrit un essai conforme à l'invention dans lequel on utilise des plaques haute densité. L'imprégnation est réalisée en discontinu dans une trémie, avec de l'acide formique seul. c'est-à-dire sans acide phosphorique.

III-1.1. But de l'essai et conditions initiales

Dans cet essai, on souhaite préparer une solution de formiate de cellulose, prête à filer, contenant 16 % en poids de cellulose (sur la base d'une cellulose non estérifiée) et 84 % en poids d'acides (acide formique plus acide phosphorique), et caractérisée en outre par un DS élevé. Comme expliqué précédemment, on entend par "acide formique" l'acide formique total présent dans la solution, soit sous forme de formiate soit sous forme d'acide formique libre.

On souhaite d'autre part que les acides, dans la solution finale, soient distribués dans un rapport pondéral (acide formique/acide phosphorique) voisin de 0,30. Il est en effet connu (voir le brevet EP-B-179 822 précité - essais 7 à 10 du tableau 4 par exemple) que pour une telle concentration en cellulose, un tel rapport pondéral des deux acides peut conduire à des valeurs de DS élevées (toutes supérieures à 30 % dans ces essais 7 à 10).

Cette connaissance de l'art antérieur permet donc de quantifier les valeurs prédéfinies d'ajustement $K_o$ et $R_o$ des relations (1) et (2) précitées, à savoir pour cet essai:

$$K_o = 0,16 \; ; \; R_o = 0,30.$$

On utilise 180 g de plaques entières de forme rectangulaire, préparées par découpage de plaques brutes. Ces plaques ont été découpées de manière à faciliter leur entrée dans des moyens de malaxage de taille adaptée à des essais de laboratoire. Dans le cas de dispositifs de taille industrielle, on pourrait y dérouler des plaques brutes continues, sans aucune opération de découpage préalable.

Ces plaques entières ont les caractéristiques suivantes:

- masse volumique : 0,7 $g/cm^3$ ;
- épaisseur : 1 mm ;
- surface minimale (pour chaque face) : 600 $cm^2$ ;
- DP de la cellulose : 600 ;
- teneur en eau : 6.5 % .

La composition visée pour la solution finale est donc prédéfinie ainsi:

- cellulose ($C_o$): 180 g (16 %);
- acide formique ($F_o$): 220 g (19 %) ;

- acide phosphorique ($P_o$): 730 g (65 %) ;
- autres constituants ($X_o$): aucuns .

III-1.2. Obtention de la solution et filage

Pour l'obtention de la solution, on procède comme suit:

- On verse tout d'abord 650 g d'acide formique (contenant 2 % en poids d'eau) sur les 180 g ($C_o$) de cellulose disposés préalablement dans une trémie, le rapport pondéral L/S (liquide/solide) étant ainsi égal à 3,6;

- On constate alors que l'acide formique est absorbé en quelques secondes par la cellulose, et on observe un gonflement progressif des plaques. On laisse les plaques s'imprégner ainsi dans la trémie, par simple contact, sans agitation, pendant quelques dizaines de secondes (moins d'une minute);

- On verse ensuite ces plaques ainsi imprégnées dans un mélangeur de 2 litres de capacité, comportant des bras de malaxage en forme de Z, et équipé d'un dispositif d'évacuation sous vide (mélangeur LKIII2 de la Société Linden);

- On introduit alors dans ce mélangeur les 730 g ($P_o$) d'acide orthophosphorique solide (contenant 2 % en poids d'eau) sous forme de paillettes. On malaxe cet ensemble pendant 5 minutes;

- A ce moment-là, le rapport pondéral R (acide formique/acide phosphorique) est égal à 0,89 environ, donc nettement supérieur à la valeur prédéfinie $R_o$ (0.30) pour la solution finale. La concentration en cellulose est quant à elle nettement inférieure à la valeur prédéfinie $K_o$;

- On poursuit alors le malaxage pendant 20 minutes, tout en évacuant l'excès d'acide formique, hors du mélangeur, à l'aide d'une pompe à vide (vide de 10 mbars environ). On récupère cet acide formique sous forme liquide, tout en le pesant. La pompe est arrêtée lorsque les 430 g d'acide formique en excès sont récupérés, cette quantité d'acide formique étant conservée pour une autre opération de dissolution. Il reste alors 220 g ($F_o$) d'acide formique dans la solution, et la composition finale de la solution a été ainsi ajustée aux valeurs prédéfinies $K_o$ et $R_o$;

- Le malaxage est opéré à la température ambiante au début, et le mélangeur ne comporte aucun dispositif de chauffage ou de refroidissement. La température finale de la solution est de 35°C environ. La vitesse de malaxage utilisée est de 35 tr/min environ.

On obtient ainsi, en moins de 30 minutes, 1130 g d'une solution anisotrope de formiate de cellulose dont le DS est égal à 40 % et dont le DP est égal à 430. Sa teneur en eau est égale à 4,5 % environ.

La relation suivante est donc vérifiée: $T_{sol} < 0,5$ .

Cette solution est utilisée pour filer une fibre de formiate de cellulose, selon la technique dite avec "couche non coagulante" (dry-jet-wet). On peut ensuite régénérer cette fibre pour obtenir une fibre en cellulose régénérée. Ces techniques connues sont par exemple telles que décrites dans le brevet EP-B-179 822 précité.

On obtient ainsi une fibre en cellulose régénérée (DS < 1 %), constituée de 500 filaments élémentaires, dont le titre est de 92 tex et dont les propriétés mécaniques sont les suivantes: ténacité : 65 cN/tex ; allongement à la rupture : 4,6 % ; module initial : 2650 cN/tex.

III-2. Essai B

Cet exemple décrit un essai non conforme à l'invention, et il est donné à titre de comparaison avec l'essai A précédent.

On réalise une solution de formiate de cellulose de manière connue, c'est-à-dire en effectuant tout d'abord un broyage préalable des mêmes plaques de cellulose que celles employées dans l'essai A précédent, pour obtenir une poudre. On introduit ensuite 180 g de cette poudre, 220 g d'acide formique et 730 g d'acide phosphorique, dans le même mélangeur que pour l'essai A.

Après un malaxage de 30 minutes, on obtient une solution anisotrope dont le DS (40 %) et le DP (440) sont quasiment identiques à ceux de la solution obtenue dans l'essai A précédent, et de même teneur en eau que cette dernière.

Cette solution est filée conformément à l'essai A. La fibre obtenue après régénération (DS < 1 %) possède un titre de 92 tex (pour 500 filaments élémentaires) et les propriétés mécaniques suivantes: ténacité : 65 cN/tex ;

allongement à la rupture : 4,5 % ; module initial : 2650 cN/tex.

Les propriétés des fibres de l'exemple A et de l'exemple B sont donc tout à fait voisines.

III-3. Essai C :

Cet exemple décrit un essai conforme à l'invention, dans lequel on utilise une plaque haute densité, sous forme d'une bande continue. L'imprégnation est réalisée avec un mélange d'acide formique et d'acide phosphorique. Les étapes d'imprégnation, d'ajustement et de malaxage sont toutes réalisées en continu.

III-3.1. But de l'essai et conditions initiales

Dans cet essai, on souhaite préparer une solution de formiate de cellulose, prête à filer, contenant 22 % en poids de cellulose et 78 % en poids d'acides (acide formique + acide phosphorique), et caractérisée par un DS élevé. On vise pour cela, dans la solution finale, un rapport pondéral (acide formique/acide phosphorique) égal à 0,30 environ.

Les valeurs prédéfinies d'ajustement $K_o$ et $R_o$, dans les relations (1) et (2), sont donc les suivantes:

$$K_o = 0,22 \; ; \; R_o = 0,30.$$

On utilise dans cet essai une plaque entière sous la forme d'une bande continue, telle que livrée industriellement. c'est-à-dire enroulée sur elle-même. Cette plaque a les caractéristiques suivantes:

- masse volumique : 0,7 g/cm$^3$ ;
- épaisseur : 0,9 mm ;
- largeur : 178 mm ;
- poids : 30 kg ;
- longueur : 280 m;
- DP de la cellulose: 560 ;
- teneur en eau: 5 % .

La composition visée pour la solution finale est donc la suivante, par exemple pour 220 g de cellulose correspondant à une longueur initiale de plaque d'environ 1,10 m:

- cellulose ($C_o$): 220 g (22 %);
- acide formique ($F_o$): 180 g (18 %) ;
- acide phosphorique ($P_o$): 600 g (60 %) ;
- autres constituants ($X_o$): aucuns.

Pour le choix du rapport pondéral d'imprégnation $R_i$, on soumet préalablement des échantillons de cette plaque au test d'imprégnation décrit au paragraphe 1-5. Ce test est réalisé à l'aide de 5 mélanges d'acide formique et d'acide phosphorique, de teneur décroissante en acide formique, de manière à faire varier le rapport pondéral F/P (acide formique/ acide phosphorique) dans le domaine de 9 à 1 environ. On mesure pour chaque mélange le temps d'imprégnation (noté "t") et on reporte la racine carrée du temps "t" en fonction du rapport pondéral (F/P) des deux acides. On obtient ainsi la courbe C, telle que représentée sur la figure 2.

Comme expliqué précédemment, les conditions optimales d'imprégnation correspondent à la partie C-1 de la courbe (R > $R_c$). La valeur $R_c$ (environ 2) étant notablement supérieure à la valeur prédéfinie Ro (0,3), on applique donc, conformément aux explications précédentes, la relation suivante pour le choix du liquide d'imprégnation:

$$R_i > R_c.$$

On choisit dans le cas présent $R_i$ égal à 3, le rapport ($R_i/R_o$) étant alors égal à 10.

Le liquide d'imprégnation choisi contient donc 75 % d'acide formique et 25 % d'acide phosphorique. Ces deux acides contiennent de 2 à 2,5 % en poids d'eau.

III-3.2. Obtention de la solution

Pour l'obtention de la solution, on procède comme suit:

- La plaque est déroulée, puis imprégnée par simple contact, par défilement en continu dans un bain contenant le mélange prédéfini d'acide formique et d'acide phosphorique ($R_i$ = 3);

- En sortie du bain, la plaque ainsi imprégnée est essorée entre deux rouleaux presseurs dont la distance, et donc la pression d'essorage, ont été préréglées. La quantité de liquide exprimée de la plaque est ainsi ajustée de manière à ne conserver dans cette plaque, en ce qui concerne l'acide formique, que la part nécessaire $F_o$ (soit 180 g) pour la quantité de cellulose correspondante (soit $C_o$ = 220 g);

- Le temps écoulé entre l'entrée dans le bain et l'arrivée entre les deux rouleaux presseurs est égal à 5 minutes environ;

- Il reste alors, en sortie des rouleaux, environ 240 g de liquide d'imprégnation pour 220 g de cellulose, ces 240 g de liquide ne contenant que 60 g d'acide phosphorique sur les 600 g ($P_o$) nécessaires;

- la plaque ainsi imprégnée est transférée ensuite (temps de transfert inférieur à 5 minutes), par simple défilement, à l'entrée d'un mélangeur à vis en continu (mélangeur Conti DTB-6 de la société LIST), où l'on introduit alors la quantité manquante d'acide phosphorique, en dosant en continu 540 g d'acide phosphorique liquide (à la température de 55 °C environ) pour 220 g de cellulose. Les proportions de cellulose, d'acide formique et d'acide phosphorique sont ainsi toutes ajustées aux valeurs nécessaires pour la solution finale, avant l'opération de malaxage;

- On malaxe cet ensemble pendant 45 minutes, à l'intérieur du mélangeur, avec une vitesse de malaxage de 24 tr/min. Le mélangeur, d'une capacité de 16 litres, comporte des dispositifs de régulation de la température à son entrée (50°C pour cet exemple) et à sa sortie (13°C pour cet exemple).

On obtient ainsi, en moins d'une heure, une solution anisotrope de formiate de cellulose, prête à filer, dont le DS est égal à 30 % environ, le DP est égal à environ 400, et la teneur en eau est égale à environ 6 % en poids (calculée sur le poids total de solution).

La relation suivante est donc vérifiée: $T_{sol}$ < 1 .

Cette solution peut être extrudée du mélangeur, transférée en continu, après dégazage et filtration, vers une machine de filage pour y être filée, de manière connue, comme indiqué par exemple pour l'essai A précédent, ou dans le brevet EP-B-179 822 précité.

Dans cet exemple, les conditions d'imprégnation (vitesse de passage des plaques, durée d'imprégnation) ont été adaptées aux paramètres technologiques particuliers de l'essai, notamment aux conditions de transfert en continu des plaques, entre les moyens d'imprégnation et les moyens de malaxage. C'est ainsi que, dans cet essai C, le temps d'imprégnation des plaques, avant malaxage, est nettement supérieur au temps d'imprégnation réellement nécessaire pour préparer une solution, soit entre une dizaine de secondes et quelques dizaines de secondes environ pour les plaques et le liquide d'imprégnation considérés ici.

III-4. Essai D :

Cet exemple décrit un essai conforme à l'invention, dans lequel on utilise une plaque basse densité, sous forme d'une bande continue. L'imprégnation est réalisée avec un mélange d'acide formique et d'acide phosphorique dont le rapport pondéral d'imprégnation $R_i$ est ajusté dès le départ à la valeur $R_o$.

Les étapes d'imprégnation, d'ajustement et de malaxage sont toutes réalisées en continu, comme pour l'essai C précédent.

III-4.1. But de l'essai et conditions initiales

Le but et les conditions initiales sont les mêmes que pour l'essai C précédent, aux différences ou précisions près qui suivent:

- la plaque a une masse volumique de 0,4 g/cm$^3$, et une épaisseur de 0,6 mm;

- la cellulose a un DP initial de 565;

- les 220 g de plaque de cellulose, pris comme base de calcul, correspondent à une longueur initiale de plaque d'environ 5,9 mètres;

- la plaque étant une plaque basse densité, avec en outre une masse volumique sensiblement inférieure à 0,5 g/cm$^3$, on choisit ici un liquide d'imprégnation ayant une valeur $R_i$ égale à $R_o$ (soit $R_i$ = 0,30), en évitant ainsi une opération d'ajustement ultérieure.

Le mélange utilisé contient donc 23 % d'acide formique et 77 % d'acide phosphorique, les deux acides ayant une teneur initiale en eau d'environ 2 à 2,5 % en poids.

III-4.2. Obtention de la solution:
Pour l'obtention de la solution, on procède comme suit:

- La plaque est déroulée, puis imprégnée par simple contact, par défilement en continu dans un bain contenant le mélange prédéfini d'acide formique et d'acide phosphorique ($R_i$ = $R_o$ = 0,30);

- En sortie du bain, la plaque ainsi imprégnée est essorée entre deux rouleaux presseurs, comme pour l'essai C précédent. La quantité de liquide exprimée de la plaque est ainsi ajustée de manière à ne conserver dans ladite plaque, que la quantité nécessaire de liquide (soit $F_o+P_o$ = 780 g) pour la quantité donnée de cellulose (soit $C_o$ = 220 g);

- Le temps écoulé entre l'entrée dans le bain et l'arrivée entre les deux rouleaux presseurs est de 1 minute environ.

- Il reste alors en sortie des rouleaux presseurs environ 780 g de liquide d'imprégnation pour 220 g de cellulose, et aucune opération ultérieure d'ajustement n'est nécessaire;

- A la sortie des rouleaux, la plaque ainsi imprégnée est transférée automatiquement vers le mélangeur, comme décrit dans l'essai C précédent, le temps de transfert étant inférieur à 5 minutes. On malaxe l'ensemble pendant 45 minutes, à une vitesse de 24 tr/min.

- La température du mélangeur est de 40 °C à son entrée, de 13°C à sa sortie;

On obtient ainsi, en moins d'une heure, une solution anisotrope de formiate de cellulose, prête à filer, dont le DS est égal à environ 30 %, le DP est égal à 395, et la teneur en eau est égale à environ 6 %.

La relation suivante est donc vérifiée: $T_{sol} < 1$ .

Cette solution est extrudée du mélangeur, et elle peut être ensuite filée, de manière connue, comme indiqué précédemment.

Comme dans l'exemple C précédent, le temps d'imprégnation a été adapté aux conditions technologiques particulières de mise en oeuvre de l'essai, un temps d'imprégnation de 10 secondes seulement étant suffisant, pour les plaques considérées, pour réaliser une solution conforme à l'invention.

De manière générale, les fibres obtenues après filage des solutions de l'invention, en les filant conformément au brevet EP-B-179 822, ont des propriétés mécaniques analogues à celles obtenues par filage de solutions réalisées à partir de cellulose en poudre. Ceci démontre notamment que les solutions conformes à l'invention et celles préparées à partir de poudre ont des caractéristiques de filabilité équivalentes.

En conclusion, le procédé conforme à l'invention permet de préparer une solution de formiate de cellulose de manière simple et avantageuse du point de vue économique.

Un tel procédé était tout à fait inattendu pour l'homme du métier, toutes les méthodes connues d'obtention de solutions de dérivés cellulosiques, en partant de plaques de cellulose, mettant en oeuvre soit la réduction préalable en poudre, soit la désagrégation mécanique préalable de ces plaques.

Les avantages du procédé de l'invention sont nombreux, on citera notamment ceux qui suivent:

- Il permet d'employer tout type de plaques de cellulose, des plaques de cellulose entières, continues ou non continues, en particulier des plaques brutes telles qu'elles sont disponibles industriellement, et notamment des plaques haute densité, plus attractives industriellement;

- Il ne nécessite aucune étape préalable de désagrégation ou de déstructuration des plaques, comme une réduction en poudre ou un déchiquetage, évitant ainsi tous les inconvénients connus de telles méthodes, notamment les risques d'explosion ou d'incendie, ou les risques de désactivation chimique de la cellulose;

- Il est simple et rapide à mettre en oeuvre, les plaques de cellulose ne subissant en outre qu'un nombre limité d'opérations;

- Il ne nécessite l'emploi que de deux agents de base, le premier (acide formique) jouant à la fois le rôle d'agent d'imprégnation et celui d'agent d'estérification de la cellulose, le second (acide phosphorique) jouant à la fois le rôle d'agent solvant du système, et celui de lubrifiant pour le malaxage;

- Il permet, grâce à des opérations d'ajustement pendant sa mise en oeuvre, d'obtenir des solutions prêtes à filer, ces solutions étant en outre obtenues dans des temps très courts;

- Il peut être mis en oeuvre en continu avec les opérations de filage, notamment lorsque les plaques utilisées sont des bandes ou des bandelettes continues;

- Il présente enfin l'intérêt d'être non polluant, dans les conditions d'utilisation décrites.

Bien entendu, l'invention n'est pas limitée aux exemples précédemment décrits.

C'est ainsi par exemple que l'étape d'imprégnation des plaques peut être réalisée autrement que par simple contact avec le liquide d'imprégnation, l'invention s'appliquant au cas où l'on provoque, à l'aide de forces externes, la pénétration forcée du liquide d'imprégnation dans les plaques, par exemple en injectant ledit liquide, en utilisant des techniques de centrifugation, ou encore en aspirant ce liquide à travers les plaques grâce à des techniques de pompage sous vide. Dans le cas de l'emploi de telles forces externes, et si le liquide d'imprégnation contient de l'acide phosphorique, le rapport pondéral d'imprégnation Ri est alors préférentiellement choisi égal au rapport Ro prédéfini pour la solution finale.

C'est ainsi d'autre part que différents constituants peuvent être éventuellement ajoutés aux trois matières de base que sont la cellulose, l'acide formique et l'acide phosphorique, ces constituants étant alors utilisés en proportion mineure, le total de leurs parties en poids dans la solution finale, noté $X_o$, étant de préférence inférieur à 10 %, de manière encore plus préférentielle inférieur à 5 % (pourcentage en poids de la solution).

Le terme "plaques de cellulose" couvre notamment les cas où ces constituants supplémentaires sont déjà présents dans les plaques initiales.

Ces constituants supplémentaires, de préférence non réactifs ou peu réactifs avec les trois matières de base, peuvent être par exemple des sels, des solvants tels que des alcools (par exemple le méthanol), des cétones (par exemple l'acétone), des plastifiants, des colorants, des polymères autres que la cellulose susceptibles éventuellement d'être estérifiés pendant la réalisation de la solution.

Il peut s'agir également de diverses charges ou autres additifs permettant par exemple d'améliorer ou d'accélérer l'imprégnation et/ou le malaxage des plaques, en abaissant par exemple la tension de surface des liquides utilisés, ou permettant d'améliorer la filabilité des solutions obtenues et/ou les propriétés des fibres filées à partir de ces solutions, par exemple leurs propriétés mécaniques, leurs propriétés d'endurance, ou leur adhésivité à une matrice de gomme.

D'autre part, le terme "formiate de cellulose" utilisé dans ce document couvre les cas où les groupes hydroxyle de la cellulose sont substitués par d'autres groupes que les groupes formiate, en plus de ces derniers, par exemple des groupes esters, notamment des groupes acétate, le degré de substitution de la cellulose en ces autres groupes étant de préférence inférieur à 10 %.


**Revendications**

1. Procédé pour préparer directement une solution de formiate de cellulose, par réaction de cellulose avec de l'acide formique et de l'acide phosphorique, caractérisé par les points suivants:

    a) on utilise des plaques de cellulose;

    b) on imprègne tout d'abord complètement lesdites plaques avec un liquide d'imprégnation à base d'acide formique;

    c) après cette imprégnation préliminaire, on malaxe les plaques au contact à la fois de l'acide formique et de l'acide phosphorique.

2. Procédé selon la revendication 1, caractérisé en ce que les plaques sont des plaques entières.

**3.** Procédé selon l'une quelconque des revendications 1 ou 2, caractérisé en ce que les plaques ont une épaisseur comprise entre 0,2 mm et 5 mm.

**4.** Procédé selon l'une quelconque des revendications 1 à 3, caractérisé en ce que les plaques ont une masse volumique comprise entre 0,2 et 1,1 $g/cm^3$.

**5.** Procédé selon l'une quelconque des revendications 1 à 4, caractérisé en ce qu'il est mis en oeuvre de manière à vérifier, à la fin du procédé, les deux relations suivantes dans la solution finale:

$$(1): K_o = C_o/(C_o+F_o+P_o+X_o) \; ; (2): R_o = (F_o/P_o),$$

avec:

$C_o$ : parties en poids de cellulose, sur la base d'une cellulose non estérifiée;
$F_o$ : parties en poids d'acide formique total, cet acide formique étant soit sous forme de formiate, soit sous forme d'acide formique libre;
$P_o$ : parties en poids d'acide phosphorique;
$X_o$ : parties en poids d'autres constituants éventuels;
$K_o$ : valeur prédéfinie d'ajustement de la concentration en cellulose;
$R_o$ : valeur prédéfinie d'ajustement du rapport pondéral des acides formique et phosphorique.

**6.** Procédé selon la revendication 5, caractérisé par les points suivants:

d) le liquide d'imprégnation ne contient pas d'acide phosphorique;

e) après l'imprégnation préliminaire, on ajoute de l'acide phosphorique, et on enlève si nécessaire de l'acide formique, de manière à vérifier, à la fin du procédé, les relations (1) et (2) dans la solution finale.

**7.** Procédé selon la revendication 5, caractérisé par les points suivants:

d) le liquide d'imprégnation contient de l'acide phosphorique, le rapport pondéral des acides formique et phosphorique, dans ledit liquide, étant défini ainsi:

$$R_i = (F_i/P_i), \text{ avec:}$$

$F_i$ : parties en poids d'acide formique;
$P_i$ : parties en poids d'acide phosphorique,
$R_i$ étant dit rapport pondéral d'imprégnation;

e) après l'imprégnation préliminaire, on ajoute de l'acide phosphorique et/ou on enlève de l'acide formique, de manière à vérifier, à la fin du procédé, les relations (1) et (2) dans la solution finale.

**8.** Procédé selon l'une quelconque des revendications 4 à 7, caractérisé en ce que les plaques ont une masse volumique au moins égale à 0,5 $g/cm^3$.

**9.** Procédé selon la revendication 8, caractérisé en ce que l'on a la relation suivante:

$$R_i > R_o.$$

**10.** Procédé selon l'une quelconque des revendications 4 à 7, caractérisé en ce que les plaques ont une masse volumique inférieure à 0,5 $g/cm^3$.

**11.** Procédé selon la revendication 10, caractérisé en ce que l'on a la relation suivante:

$$R_i = R_o .$$

12. Procédé selon l'une quelconque des revendications 1 à 11, caractérisé en ce que la relation suivante est vérifiée :

$$T_{sol} < 3 ,$$

$T_{sol}$ étant le temps de mise en solution des plaques, exprimé en heure.

13. Procédé selon la revendication 12, caractérisé en ce que la relation suivante est vérifiée :

$$T_{sol} < 1 .$$

14. Procédé selon la revendication 13, caractérisé en ce que la relation suivante est vérifiée :

$$T_{sol} < 0,5 .$$

15. Procédé selon l'une quelconque des revendications 1 à 14, caractérisé en ce que l'imprégnation des plaques est réalisée par défilement en continu dans le liquide d'imprégnation.

16. Procédé selon l'une quelconque des revendications 1 à 14, caractérisé en ce que l'imprégnation des plaques est réalisée en discontinu.

17. Procédé selon l'une quelconque des revendications 1 à 16, caractérisé en ce que, à l'état initial, la plaque de cellulose a une teneur en eau inférieure à 10 % en poids, et l'acide formique et l'acide phosphorique ont chacun une teneur en eau supérieure à 1 % et inférieure à 5 % (% en poids).

18. Procédé selon l'une quelconque des revendications 5 à 17, caractérisé en ce qu'il est mis en oeuvre pour obtenir une solution prête à filer.

19. Procédé selon l'une quelconque des revendications 1 à 18, caractérisé en ce que l'étape d'imprégnation des plaques de cellulose est réalisée par simple contact des plaques avec le liquide d'imprégnation.

20. Procédé selon l'une quelconque des revendications 1 à 18, caractérisé en ce que l'étape d'imprégnation des plaques de cellulose est réalisée par pénétration forcée du liquide d'imprégnation à l'aide de forces externes.

**Patentansprüche**

1. Verfahren zum unmittelbaren Herstellen einer Cellulose-Formiatlösung durch Reaktion von Cellulose mit Ameisensäure und Phosphorsäure, gekennzeichnet durch die folgenden Schritte:

   d) man benutzt Celluloseplatten;

   e) man imprägniert zunächst die genannten Platten vollständig mit einer Imprägnierungsflüssigkeit auf der Grundlage von Ameisensäure; und

   f) nach dieser vorausgehenden Imprägnierung knetet man die Platten in Berührung gleichzeitig mit Ameisensäure und mit Phosphorsäure.

2. Verfahren nach Anspruch 1, dadurch gekennzeichnet, daß diese Platten ganze Platten sind.

3. Verfahren nach irgendeinem der Ansprüche 1 oder 2, dadurch gekennzeichnet, daß die Platten eine Dicke haben, die zwischen 0,2 und 5 mm liegt.

**4.** Verfahren nach irgendeinem der Ansprüche 1 bis 3, dadurch gekennzeichnet, daß die Platten eine auf das Volumen bezogene Masse aufweisen, die zwischen 0,2 und 1,1 $g/cm^3$ liegt.

**5.** Verfahren nach irgendeinem der Ansprüche 1 bis 4, dadurch gekennzeichnet, daß es auf eine solche Weise durchgeführt wird, daß am Ende des Verfahrens die beiden folgenden Zuordnungen in der endgültigen Lösung vorliegen:

$$(1) \quad K_o = C_o/(C_o+F_o+P_o+X_o) ; \quad (2) \quad R_o=(F_o/P_o),$$

wobei:

$C_o$: Gewichtsanteile an Cellulose auf der Basis einer nicht-veresterten Cellulose;
$F_o$: Gesamt-Gewichtsanteile an Ameisensäure, wobei diese Ameisensäure sowohl in Form von Formiat als auch in Form freier Ameisensäure vorliegt;
$P_o$: Gewichtsanteile an Phosphorsäure;
$X_o$: Gewichtsanteile anderer, ggf. vorliegender Bestandteile;
$K_o$: Vordefinierter Einstellwert der Cellulosekonzentration;
$R_o$: Vordefinierter Einstellwert des Gewichtsverhältnisses von Ameisen- und Phosphorsäure.

**6.** Verfahren nach Anspruch 5, gekennzeichnet durch die folgenden Schritte:

d) die Imprägnierflüssigkeit enthält keine Phosphorsäure

e) nach der vorhergehenden Imprägnierung fügt man Phosphorsäure hinzu und man entfernt notwendigenfalls Ameisensäure, und zwar auf eine solche Weise, daß am Ende des Verfahrens die Zuordnungen (1) und (2) in der endgültigen Lösung vorliegen.

**7.** Verfahren nach Anspruch 5, gekennzeichnet durch die folgenden Schritte:

d) die Imprägnierungsflüssigkeit enthält Phosphorsäure, wobei das Gewichtsverhältnis von Ameisen- und Phosphorsäure in der genannten Flüssigkeit so definiert ist:

$$R_i = (F_i/P_i), \text{ wobei:}$$

$F_i$: Gewichtsanteile der Ameisensäure;
$P_i$: Gewichtsanteile der Phosphorsäure, und
$R_i$: Imprägnierungs-Gewichtsverhältnis genannt ist;

e) nach der vorausgehenden Imprägnierung fügt man Phosphorsäure hinzu und/oder entfernt Ameisensäure, und zwar derart, daß am Ende des Verfahrens die Zuordnungen (1) und (2) in der endgültigen Lösung vorliegen.

**8.** Verfahren nach irgendeinem der Ansprüche 4 bis 7, dadurch gekennzeichnet, daß die Platten eine auf das Volumen bezogene Masse haben, die mindestens 0,5 $g/cm^3$ beträgt.

**9.** Verfahren nach Anspruch 8, dadurch gekennzeichnet, daß die folgende Zuordnung vorliegt:

$$R_i > R_o.$$

**10.** Verfahren nach irgendeinem der Ansprüche 4 bis 7, dadurch gekennzeichnet, daß die Platten eine auf das Volumen bezogene Masse von weniger als 0,5 $g/cm^3$ aufweisen.

**11.** Verfahren nach Anspruch 10, dadurch gekennzeichnet, daß die folgende Zuordnung vorliegt:

$$R_i = R_o.$$

**12.** Verfahren nach irgendeinem der Ansprüche 1 bis 11, dadurch gekennzeichnet, daß die folgende Zuordnung eingestellt ist:

$$T_{sol} < 3,$$

wobei $T_{sol}$ die Zeit des Übergangs der Platten in Lösung ist, ausgedrückt in Stunden.

**13.** Verfahren nach Anspruch 12, dadurch gekennzeichnet, daß die folgende Zuordnung eingestellt ist:

$$T_{sol} < 1.$$

**14.** Verfahren nach Anspruch 13, dadurch gekennzeichnet, daß die folgende Zuordnung eingestellt ist:

$$T_{sol} < 0,5.$$

**15.** Verfahren nach irgendeinem der Ansprüche 1 bis 14, dadurch gekennzeichnet, daß die Imprägnierung der Platten durch ständigen Durchlauf in der Imprägnierungsflüssigkeit durchgeführt wird.

**16.** Verfahren nach irgendeinem der Ansprüche 1 bis 14, dadurch gekennzeichnet, daß die Imprägnierung der Platten diskontinuierlich durchgeführt wird.

**17.** Verfahren nach irgendeinem der Ansprüche 1 bis 16, dadurch gekennzeichnet, daß im Anfangszustand die Celluloseplatte eine Wasserhaltigkeit aufweist, die kleiner ist als 10 Gew.%, und daß die Ameisensäure und die Phosphorsäure jeweils einen Wassergehalt aufweisen, der größer ist als 1% und kleiner ist als 5% (Gewichts%).

**18.** Verfahren nach irgendeinem der Ansprüche 5 bis 17, dadurch gekennzeichnet, daß es eingesetzt wird, um eine spinnbereite Lösung zu gewinnen.

**19.** Verfahren nach irgendeinem der Ansprüche 1 bis 18, dadurch gekennzeichnet, daß der Schritt der Imprägnierung der Celluloseplatten durch einfache Berührung der Platten mit der Imprägnierungsflüssigkeit durchgeführt wird.

**20.** Verfahren nach irgendeinem der Ansprüche 1 bis 18, dadurch gekennzeichnet, daß der Schritt der Imprägnierung der Celluloseplatten durch erzwungene Ein- bzw. Durchdringung der Imprägnierungsflüssigkeit mit Hilfe äußerer Kräfte durchgeführt wird.

**Claims**

**1.** A process for directly preparing a solution of cellulose formate by reaction of cellulose with formic acid and phosphoric acid, characterised by the following points:

    a) cellulose plates are used;
    b) said plates are first fully impregnated with an impregnating liquid based on formic acid;
    c) after this preliminary impregnation, the plates are kneaded in contact with both formic acid and phosphoric acid.

**2.** A process according to Claim 1, characterised in that the plates are entire plates.

**3.** A process according to either one of Claims 1 or 2, characterised in that the plates have a thickness of between 0.2 mm and 5 mm.

**4.** A process according to any one of Claims 1 to 3, characterised in that the plates have a density of between 0.2 and 1.1 $g/cm^3$.

**5.** A process according to any one of Claims 1 to 4, characterised in that it is carried out so as to verify, at the end of the process, the following two relationships in the final solution:

$$(1): K_o = C_o/(C_o + F_o + P_o + X_o); (2): R_o = (F_o/P_o)$$

with:

$C_o$: parts by weight of cellulose, based on a non-esterified cellulose;
$F_o$: total parts by weight of formic acid, this formic acid being either in the form of formate or in the form of free formic acid;
$P_o$: parts by weight of phosphoric acid;
$X_o$: parts by weight of other optional constituents;
$K_o$: predefined adjustment value for the cellulose concentration;
$R_o$: predefined adjustment value for the weight ratio of the formic and phosphoric acids.

6. A process according to Claim 5, characterised by the following points:

   d) the impregnation liquid does not contain phosphoric acid;
   e) after the preliminary impregnation, phosphoric acid is added, and formic acid is if necessary removed, so as to verify, at the end of the process, the relationships (1) and (2) in the final solution.

7. A process according to Claim 5, characterised by the following points:

   d) the impregnation liquid contains phosphoric acid, the weight ratio of the formic and phosphoric acids in said liquid being defined as follows:

$$R_i = (F_i/P_i), \text{ with:}$$

   $F_i$: parts by weight of formic acid;
   $P_i$: parts by weight of phosphoric acid;
   $R_i$ being referred to as the impregnating weight ratio,

   e) after the preliminary impregnation, phosphoric acid is added and/or formic acid is if necessary removed, so as to verify, at the end of the process, the relationships (1) and (2) in the final solution.

8. A process according to any one of Claims 4 to 7, characterised in that the plates have a density of at least 0.5 g/cm$^3$.

9. A process according to Claim 8, characterised in that there is the following relationship:

$$R_i > R_o.$$

10. A process according to any one of Claims 4 to 7, characterised in that the plates have a density of less than 0.5 g/cm$^3$.

11. A process according to Claim 10, characterised in that there is the following relationship:

$$R_i = R_o.$$

12. A process according to any one of Claims 1 to 11, characterised in that the following relationship is verified:

$$T_{sol} < 3,$$

$T_{sol}$ being the time to dissolve the plates, expressed in hours.

**13.** A process according to Claim 12, characterised in that the following relationship is verified:

$$T_{sol} < 1.$$

**14.** A process according to Claim 13, characterised in that the following relationship is verified:

$$T_{sol} < 0.5.$$

**15.** A process according to any one of Claims 1 to 14, characterised in that the plates are impregnated by continuous throughput in the impregnating liquid.

**16.** A process according to any one of Claims 1 to 14, characterised in that the plates are impregnated batchwise.

**17.** A process according to any one of Claims 1 to 16, characterised in that, in the initial state, the cellulose plate has a water content of less than 10% by weight, and the formic acid and phosphoric acid each have a water content of greater than 1% and less than 5% (% by weight).

**18.** A process according to any one of Claims 5 to 17, characterised in that it is carried out in order to obtain a ready-for-spinning solution.

**19.** A process according to any one of Claims 1 to 18, characterised in that the impregnating step of the cellulose plates is carried out by simple contact of the plates with the impregnating liquid.

**20.** A process according to any one of Claims 1 to 18, characterised in that the impregnating step of the cellulose plates is carried out by forced penetration of the impregnating liquid by means of external forces.

## Fig. 1

## Fig. 2